# EUROPEAN PATENT SPECIFICATION

(11) **EP 0 862 111 B1**
(45) Date of publication and mention of the grant of the patent: **21.07.2010**
(21) Application number: 98101978.9
(22) Date of filing: 05.02.1998
(51) Int. Cl.: G06F 9/318

(54) **Dynamic conversion between different instruction codes by recombination of instruction elements**
Dynamische Übersetzung zwischen verschiedenen Befehlskodes durch Wiederzusammensetzung von Befehlselementen
Traduction dynamique entre codes d'instruction différents en recombinaison d'éléments d'instruction

(30) Priority: 27.02.1997 EP 97103233
(43) Date of publication of application: 02.09.1998
(73) Proprietor: International Business Machines Corporation, Armonk, NY 10504 (US)
(72) Inventor: Hilgendorf, Rolf, Dipl.-Ing., 71034 Böblingen (DE); Schwermer, Hartmut, Dr. Dipl.-Phys., 70199 Stuttgart (DE); Söll, Werner, Dipl.-Ing., 71101 Schönaich (DE)
(74) Representative: Döhler, Denis

(56) References cited:
- EP-A- 0 109 567
- EP-A- 0 199 173
- "IBM SYSTEM/370 EMULATOR MICRO-INSTRUCTION PORTION IMPLEMENTED IN MASTER-SLICE (GATE ARRAY) LOGIC" IBM TECHNICAL DISCLOSURE BULLETIN, vol. 30, no. 4, 1 September 1987, pages 1590-1592, XP000098282
- KEMP J C: "INSTRUCTION TRANSLATOR" IBM TECHNICAL DISCLOSURE BULLETIN, vol. 15, no. 3, August 1972, page 920 XP002046741

## Description

### Field of the invention

This invention is related to conversion of instructions from one instruction set to another instruction set, and in particular to translation of code of a first computer architecture to code of a second computer architecture.

### Background of the invention

In each computing system, there has to exist a precise definition of the instructions the processor can handle, of the format of these instructions, and of the arguments and operands required by these instructions. This definition of a processor's instruction set is usually referred to as the architected code.

There exist a multitude of different codes, and each code can only be handled by the corresponding processor type. Compilers, which translate programs written in a higher language to a sequence of basic processor instructions, are only capable of producing code corresponding to one specific computer architecture. It would be desirable to be able to process programs written in different codes by one processor type. Thus, programs written for different computer architectures could be processed, which implies that the range of programs available for each processor type would increase. Recompiling source code in order to produce suitable code for the different processor types would no longer be necessary.

There often exist different versions of instruction sets for one processor type. Being able to convert instructions from one instruction set to another would thus also allow a quick handling of updated code.

For a long time, the debate has been going on about whether CISC (Complex Instruction Set Computing) or RISC (Reduced Instruction Set Computing) is better suited for high performance computing. When CISC instructions are processed, lots of tasks are performed in parallel. CISC instructions usually are long and complex. Because of the inherent parallelism, large processor cycle times are required. The typical pipeline for CISC computing comprises a rather low amount of pipeline stages. CISC instructions are hard to bring to a common format.

In contrary, RISC instructions are short and simple and do not start a lot of parallel tasks when they are executed. They only fulfill one well-defined task, and they can easily be brought to one common format. Execution units for RISC processing comprise pipelines with a large amount of pipeline stages. The processor cycle for RISC processing can be very short, which means that instructions can be quickly clocked through the different pipeline stages.

Modern superscalar processing concepts suggest to process the basic instructions out of their sequential order, which means that any parallelism hidden in a sequential program is exploited. A performance gain is achieved by dispatching a multitude of completely independent instructions from different points of the instruction stream to various execution units in the same clock cycle. For a number of reasons, RISC instructions are better suited for out-of-order processing than CISC instructions. Because a typical RISC instruction only defines one task, the instruction itself, together with its source and target operands, can be brought to a simple format. Furtheron short cycle times are possible. This is especially important for out-of-order processing since the resolution of data dependencies, including register renaming, is one of the major challenges.

Considering all these arguments, one might conclude that a superscalar processor having a RISC architecture is favorable. On the other hand, CISC is a widespread standard in many fields, and there exists a lot of code for CISC architectures. For this reason, it makes sense to break up external CISC instructions to a number of internal RISC instructions which can then be processed out-of-order by a superscalar RISC processor. Such a processing concept requires a powerful CISC to RISC converter.

Several solutions have been proposed for code conversion at run time. In IBM TDB Publication "System/370 Emulator Assist Processor For A Reduced Instruction Set Computer", Vol. 30, No. 10, March 1988, to J. Garcia, E.S. Hannon, R. Kalla, J.A. Mitchell and D.M. Zareski, microcode-controlled conversion of the external S/370 code, which is a CISC code, to the internal RISC instructions is described. First, the "Emulation Assist Processor" loads an external S/370 instruction which is to be translated. Next, microcode from a specialized local microcode control store is executed in order to generate multiple host instructions for said single S/370 instruction.

Compared to a real hardware-controlled translation, any translation that is done by executing microcode routines is slow. For a code conversion at run time, code translation from the external CISC instructions to internal RISC instructions may only take several cycles. Microcode-controlled conversion takes a lot of cycles, because the whole microcode routine has to be executed.

Furtheron, the emulation assist processor can only translate one instruction at a time. Parallel conversion of several instructions dispatched at the same time is therefore impossible.

A more refined converting scheme is described in European Patent Application 651 320 A1, "Superscalar Instruction Decoder", to D. B. Witt and M.D. Goddard. In this document, a decoder is described, which translates CISC instructions to a number of RISC instructions at run time. The RISC instructions emerging from the decode process are forwarded to a RISC superscalar processor. Thus, use of a CISC instruction set can be combined with the advantages of superscalar RISC processing. Dependent on the number of RISC-like operations to be generated from one CISC instruction, two translation paths are described: in case the number of RISC operations to be generated exceeds three, code translation is performed by executing a microcode routine. For CISC operations with less complexity, which can be expressed by less than four RISC-like operations, a fast conversion path is implemented. Register identifiers of the CISC instruction are routed by means of programmable array logic (PAL) or combinatorial logic to the corresponding RISC-like operations.

In case any architectural changes are made to either the external or the internal code, the decode logic would have to be changed. It also would have to be changed if errors in the conversion path arise. In case of combinatorial logic, the whole logic will have to be remapped. In case of programmable array logic, reprogramming the logic is possible in order to implement changes. But it is difficult to implement selective changes. Reprogramming a certain conversion function of the PAL requires to reprogram the whole logic, and therefore, it would be desirable to be able to change the conversion path in a more selective way.

IBM TDB Publication "IBM System/370 Emulator Micro-Instruction Portion Implemented in Master-Slice (Gate Array) Logic", Vol. 30, No. 4, September 1987, describes an Emulator Assist Processor for instruction conversion from an external code to an internal code, wherein one instruction of the external code is converted into a number of instructions of the internal code using a control instruction which depends on the respective external instruction and is fetched from an instruction memory.

A first internal instruction is created on the basis of the control instruction. After this, a further control instruction is fetched from the instruction memory on the basis of which a second internal instruction is created, and so on, i.e. all internal instructions corresponding to the external instruction are created one after another which requires an amount of clock cycles proportional to the number of internal instructions.

A similar method and apparatus is disclosed in European Patent Application 0 109 567 A2.

In IBM TDB Publication "Instruction Translator", Vol. 15, No. 3, August 1972, an instruction emulator is described that is capable of converting an instruction of an external code into an instruction of an internal code. The issue of consecutively converting one instruction of an external code into a number of instructions of an internal code is not delt with in this disclosure.

### Object of the invention

It is an object of the invention to provide a code converter capable of converting instructions from a code A to a code B, which avoids the drawbacks of the prior art, and which provides for a fast instruction decode at run time, for the possibility of decoding several instructions in parallel, and for an easy implementation of changes to the conversion path.

### Summary of the invention

The invention provides both an apparatus and a method for converting an instruction of a code A to a number of instructions of a code B, whereby said instruction of code A and each of said instructions of code B consist of instruction elements.

According to the invention, rearrangement information is obtained, in a first step, from at least one table, said rearrangement information corresponding to said instruction of code A that is to be converted to code B. Said instruction elements of said instruction of code A are rearranged according to said rearrangement information, in a second step, thereby generating the number of instructions of code B in parallel.

Said rearrangement is done by rearrangement means, which use instruction elements of said instruction of code A as a first input and use said rearrangement information corresponding to said instruction of code A as a second input, and which rearrange said instruction elements of said instruction of code A according to said rearrangement information, thereby generating the number of instructions of code B functionally corresponding to said instruction of code A.

The initial instruction of code A already contains the identifiers of logical registers that are necessary for generating an instruction of code B. Instead of rearranging the OP-codes, the register identifiers, status information, addresses etc. by logic means in order to generate an instruction of code B, the recombination is performed according to a pattern in a table that is related to said initial instruction of code A.

This provides for a fast instruction translation, which only requires one cycle, because the bit pattern stored in said table can directly be used by a hardware to perform the correct routing of logical register addresses, status bits, logical register identifiers, etc. . This only takes one cycle, and therefore, instruction translation and decoding can be performed at run time.

Another advantage of the invention is that the rearrangement information contained in said table means can easily be exchanged. In case there exist any errors or inconsistencies of the way instruction elements of the initial instruction are routed to the new instruction, these errors can easily be fixed by changing the table accordingly. In case of an update of either the architected code A or code B, or in case new features and/or instructions are included in any of both codes, the necessary changes can easily be made to said table means. An important point is that said changes can be implemented selectively, which means that only the instructions that have been changed have to be updated.

In order to increase performance, it might be favorable to convert several instructions of code A in parallel. Rearrangement of each of said instructions can be done by accessing one common table, because several entries of said table can be accessed in parallel. It is necessary, though, to provide a multitude of rearrangement means, corresponding to the number of initial instructions that are to be converted. In case any changes have to be made, said changes have to be made only to one central table, because said table contains all the necessary rearrangement information. This allows for a much simpler update compared to logic conversion means, where each conversion path would have to be changed. With said table means, it is easy to survey how instructions are converted.

In a further embodiment of the invention, said table means are realized as RAM table means.

Implementing said table as a RAM table provides for an especially easy way to change table contents. Any architectural changes can easily be considered. The external architecture may be well defined, but still architects add functionality to it or take away obsolete instructions. Environments may exist which need only subsets of the defined instructions or it may not be allowed to use all instructions. By changing the data loaded into the table, these requirements can be considered.

A further advantage is that errors can easily be corrected. If an error has occurred at the time an instruction has been implemented, and said error is detected late in the design cycle, for example after first power-on, it is possible, by changing the contents of said table, to build up a circumvention for the instruction concerned. Thus, one is able to continue testing the design, which reduces time-to-market and can thus save a lot of money.

In another embodiment of the invention, said table means are realized as ROM table means.

Changes to the table's entries, which might become necessary due to architectural changes or due to errors, can be taken care of by changing the ROM accordingly. But the main advantage of this implementation is that access time to a ROM is very short. A further advantage is that the chip area required for a ROM table is very small.

In a further embodiment of the invention, said instructions of code A are CISC instructions and said instructions of code B are RISC instructions.

Each CISC instruction of the external instruction stream is converted to at least one internal RISC instruction. This embodiment is especially useful when a sequence of CISC instructions has to be processed by a superscalar RISC processor. As each CISC instruction usually has to be replaced by a number of RISC instructions, it is advantageous to address a table entry that contains all the necessary rearrangement information for generating the required number of RISC instructions. A fast and efficient CISC/RISC decode becomes possible. Changes of both the external CISC code or the internal RISC code can easily be implemented.

In another embodiment of the invention, both said instructions of code A and said instructions of code B are RISC instructions.

The possibility of converting one set of RISC instructions to a different set of RISC instructions allows to process an instruction stream of code A by a processor which normally can only handle instruction code B. By means of translation tables containing rearrangement information, one processor can process a variety of different RISC codes which are not the architected codes of said processor. By either using different tables in parallel or by exchanging the contents of a table, it is possible to switch between different codes. As code conversion is achieved at run time, one processor can "understand" a lot of different RISC code flavors.

In a preferred embodiment of the invention, said rearrangement means are realized as multiplexing means, which multiplex said instruction elements of said instruction of code A to respective data fields representing instruction elements of at least one functionally corresponding instruction of said instructions of code B.

In order to reassemble the instruction elements of an external instruction, said instruction elements are forwarded to a multiplexer, which multiplexes said instruction elements to various data fields of the internal instruction. For a number of reasons, it is advantageous to use a multiplexer for rearrangement of the initial instruction elements: A multiplexer is a standard device that is cheap and easy to implement. Multiplexers can be realized as fast-operating devices, and therefore, rearranging said initial instruction elements can be done in one processor cycle. Furtheron, control lines can easily be implemented, with said control lines selecting the initial instruction element that is to be forwarded to a certain multiplexer's output, in order to be written to a data field of the resulting internal instruction.
According to another embodiment of the invention, said rearrangement information corresponding to said instruction of code A comprises routing information per instruction element of said instruction or said instructions of code B, with said routing information determining which of said instruction elements of said instruction of code A is to be forwarded to a respective data field representing one of said instruction elements of said instruction or said instructions of code B.

When an external instruction of code A is converted to internal instructions of code B, the table entry of said table means corresponding to said external instruction is accessed. This table entry contains said rearrangement information, which controls the rearrangement of different parts of the external instruction, in order to generate the internal instructions. In case said rearrangement means are realized as multiplexers, said rearrangement information directly controls said multiplexers. For each data field of an internal instruction of code B that is to be generated, one of the instruction elements of the external instruction of code A has to be selected, which is to be written to said data field. Thus, said rearrangement information contained in said table has to comprise routing information per code B data field, which selects the instruction element that is to be routed to said code B data field. All the instruction elements of an external code A instruction are used as inputs to a multiplexer, and the output of said multiplexer directly writes to one of said data fields of the code B instruction to be generated. In such a solution, there has to be provided one multiplexer per data field of the internal instruction.

Segmenting said rearrangement information according to the data fields of the instructions to be generated allows to directly control said rearrangement means with said rearrangement information, because said information can directly be used to select the correct input. Said routing information is used to directly determine which input is to be forwarded to said multiplexer's output. Therefore, this way of segmenting said rearrangement information is straightforward and allows for a fast instruction conversion.

According to another embodiment of the invention, said table means relate an instruction of said instructions of code A to the number of functionally corresponding instructions of code B.

When converting instructions, the external instruction has to be replaced by internal instructions in a way that exactly the same operations performed by the external instructions are performed by the internal instructions, though the codes are completely different. The instructions of code B have to functionally correspond to said external instruction of code A. In many cases it is impossible to replace one external instruction by one corresponding internal instruction. Instead, several internal instructions are necessary to completely emulate said external instruction.

This becomes obvious when looking at complex CISC instructions. Each CISC instruction performs a lot of tasks and therefore, several internal RISC operations are necessary to achieve the same functionality.

In case more than one internal instruction has to be generated, the table entry corresponding to the external instruction contains the number of said internal instructions to be generated. Rearrangement information is provided for each of the internal instructions. Therefore, all the corresponding code B instructions can be generated in parallel, which makes instruction decoding a lot faster.

Especially when decoding CISC instructions at run time, it is important that the RISC-like operations emerging from each CISC instruction can be generated in parallel.

According to a further embodiment of the invention, said table means relate an instruction of said instructions of code A to at least one OP-code of at least one functionally corresponding instruction of said instructions of code B.

The OP-code of the external instruction of code A that is to be translated is used to find the corresponding entry in said table means. Said entry relates said initial OP-code to all the OP-codes of the internal instructions that are to be generated. Thus, one or more OP-codes are contained in each table entry. While the usual case for RISC-to-RISC conversion is a one-to-one correspondence between the OP-codes of code A and the OP-codes of code B, there have to exist several OP-codes of code B per OP-code of code A in case of CISC decoding. The OP-codes of code B obtained from said table means are used, together with register identifiers, status information, etc. contained in the external instruction, to build the corresponding internal instructions of code B. Storing the corresponding code B OP-codes directly in said table means provides for a fast instruction conversion.

### Brief Description of the Drawings

- Fig. 1: shows the general setup of an instruction converter which translates external instructions to a number of internal instructions.
- Fig. 2: shows how the OP-codes of the external instructions are used to access the correct entry of a table holding the necessary information for converting said external instruction.
- Fig. 3: depicts the structure of an entry in the translation table.
- Fig. 4: shows an example for a format the internal instruction could have.
- Fig. 5: shows the layout of an instruction converter using several multiplexers for instruction translation.

### Detailed description of the invention

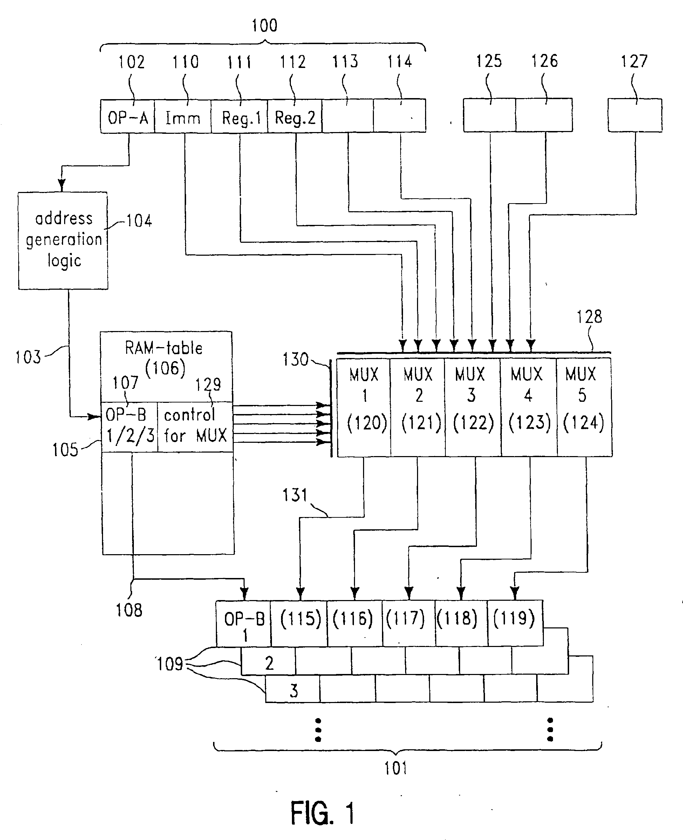

Fig. 1 shows the general setup of an instruction converter, which translates an external instruction (100), which can be either a CISC instruction or a RISC instruction, to at least one internal instruction (101). In case said internal instructions are to be processed by a superscalar processor, it is advantageous to internally use RISC code. Internal RISC instructions, which have been brought to one common format, are ideally suited for out-of-order processing.

The external instruction 100, which is an instruction of code A, comprises an OP-code of code A (102), an "immediate" data field (110), logical register identifiers (111, 112) which specify the instruction's source and target registers, and additional information about the instruction, such as status bits.

The value contained in the "immediate" data field might be needed for performing a so-called "immediate operation", such as "OR immediate", "AND immediate", etc. . Said value specifies the constant that is to be ANDed or ORed with the other operand of the immediate operation. In address arithmetics, the value contained in the "immediate" data field is used for specifying the "displacement" of an address.

Rearrangement information needed for converting the external instruction (100) to a set of internal instructions (101) is contained in a translation table (106). Said translation table can either be implemented as a ROM table or as a RAM table. Each entry (105) of said table corresponds to one of said external code A instructions (100), and determines how the instruction elements of this specific instruction are to be rearranged in order to form the corresponding internal instructions (101).

As each translation table entry (105) corresponds to one external code A instruction (100), the OP-code (102) of said external instruction can be used to determine the correct translation table entry. This is done by forwarding the OP-code (102) to an address generation logic (104), which converts said OP-code to the address of the corresponding entry in the table. This address is then used to access (103) the corresponding translation table entry (105). Said entry contains the OP-codes of all the internal code B instructions (107) to which the external instruction is to be converted to, and multiplexer control information (129), which is used for controlling the recombination of the external instruction's elements.

The code B OP-codes 107 contained in the table entry can directly be forwarded (108) to the respective data fields 109 of the internal instructions that are to be generated.

Recombination of the external instruction's elements, such as the "immediate" value (110), logical register identifiers (111, 112), status information, and others (113, 114), is performed by a set of multiplexers (120-124). Each multiplexer corresponds to one data field of the internal code B instructions; and the output of each multiplexer is directly written to the corresponding data field. Thus, MUX 1 (120) writes directly (131) to data field 115 of the code B instruction OP-B1, MUX 2 (121) corresponds to data field 116, the output of MUX 3 (122) is directly forwarded to data field 117, etc..

Each of the multiplexers (120-124) can select among a variety of possible inputs. Said possible inputs comprise all the data contained in the external code A instruction, such as the "immediate" data field 110, logical register identifiers (111, 112) for both source and target registers, status information, and others (113, 114). But besides the data contained in the external instruction, data contained in defined storage cells of the processor can be used as an input to said multiplexing means. The content of said storage cells might simply consist of constants that are permanently contained in said storage cells. Let's assume that the storage cells 125 and 126 contain two different constants, and that said two cells can be selected as an input to any of the multiplexers 120-124. In case storage cell 125 is selected, its content, which is said constant, is written to the internal instruction's data field. The constant might, for example, specify a certain processor register. This means that the name of this specific register can be selected by the multiplexer and forwarded to an internal instruction as a source or target register. The storage cells 125, 126 thus contain the names of logical registers that are to be used by said internal instructions.

Additionally, there exist auxiliary registers (127) that are also used as an input to said multiplexing means. In case the auxiliary register contents are selected as an input, their content is forwarded to a data field of the internal instruction. These auxiliary registers temporarily contain the names of logical registers.

For example, let's assume that instruction 100 is a complicated CISC instruction, which uses several logical source and target registers. When decoding this CISC instruction to a number of simple RISC operations, said RISC operations generate intermediate results. For the purpose of passing on intermediate results between different RISC instructions related to one CISC instruction, logical registers have to be temporarily provided. The name of such a logical register that holds intermediate results might be contained in storage cell 127. When the RISC instructions corresponding to one CISC instruction are built, the name of said intermediate logical register might be forwarded from storage cell 127 to any of the RISC operation's data fields, in order to specify a source or target register.

Each multiplexer selects one of the different inputs that have been discussed (128), and links the selected input to its output. The selection is performed by a number of control lines (130).

Each translation table entry holds the total MUX control information (129) necessary for translating the initial code A instruction. Said control information is segmented according to the number of internal operation that have to be built, and according to the operands of said internal instructions. Per operand of an internal instruction, a number of bits is provided, which select one of the possible inputs (110-114, 125, 126, 127), that is to be forwarded to the internal instruction operand's data fields. The MUX control information in the translation table (129) is thus segmented in a number of bit patterns corresponding to the internal instructions' operands.

The advantage of such a segmentation is that said bit patterns can directly be used to control the multiplexer corresponding to one data field of said internal instructions. For example, MUX 2 (121) holds the second operand of the first internal instruction that is to be generated. Said MUX 2 is provided with the part of said MUX control information 129 that corresponds to data field 116, in order to select the input that is to be forwarded to data field 116. The bit pattern delivered by the RAM table can directly be used to control (130) which of the possible inputs (110-114, 125, 126, 127) is to be forwarded, via the output of MUX 2, to data field 116.

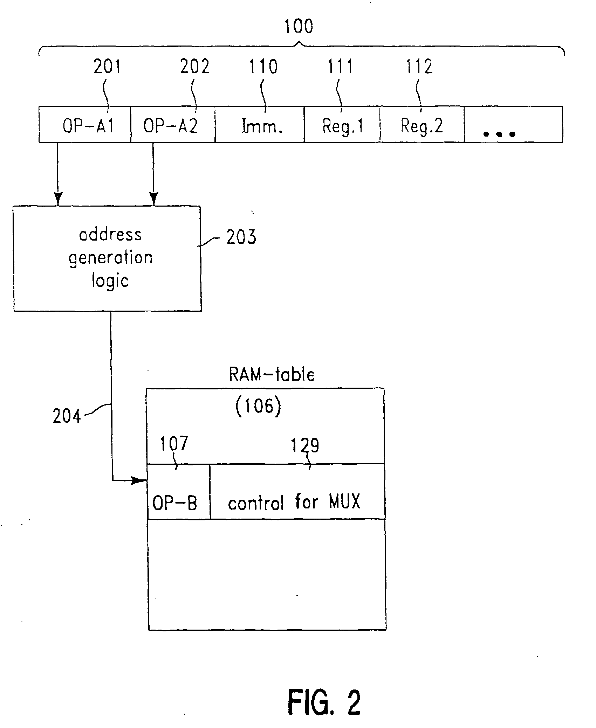

In Fig. 2, it is shown how the correct translation table entry corresponding to one external instruction (100) can be found, in case said external instruction is defined by more than one OP-code. In the example of Fig. 2, the two OP-codes OP-A1 (201) and OP-A2 (202) are both forwarded to an address generation logic (203) which decodes said OP-codes to an address in the translation table (106). By accessing this table address (204), the corresponding code B OP-codes (107), and the corresponding multiplexer control information (129) can be determined.

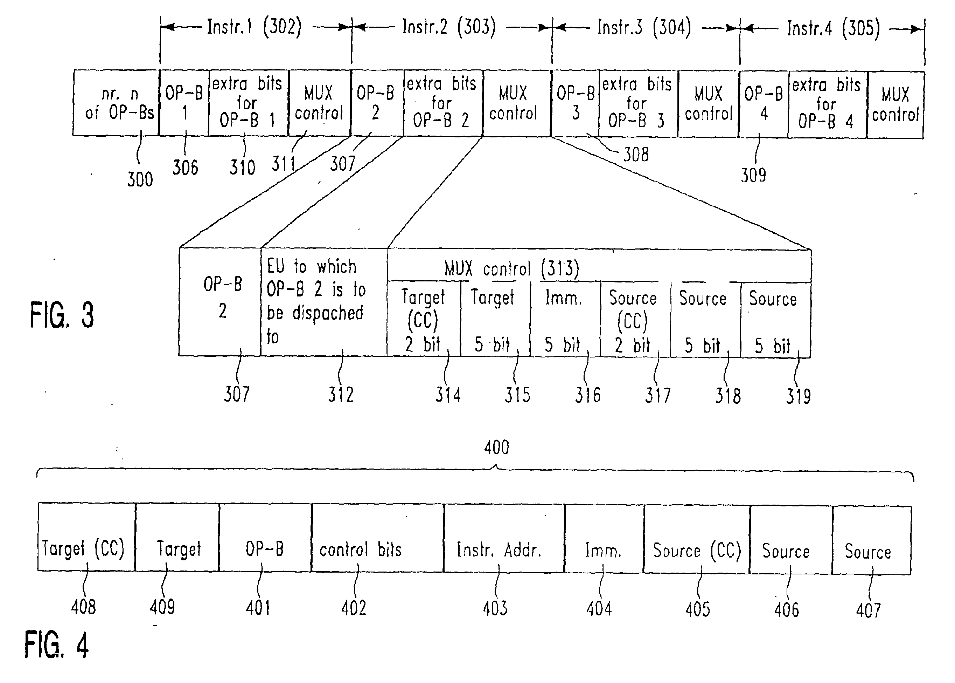

Fig. 3 depicts the structure of a translation table entry. The translation table (106) can be implemented as an array, with each row of said array holding the information corresponding to one code A instruction. A typical array would comprise several hundred entries.

In the example given in Fig. 3, an external instruction has to be converted to several internal instructions. The first data field of the entry holds the number n of internal code B instructions corresponding to said external code A instruction. In our example, n is equal to 4, and therefore, four internal instructions have to be generated.

The control information is segmented according to the instructions to be generated, there exists control data for instruction 1 (302), for instruction 2 (303), for instruction 3 (304), and for instruction 4 (305). The control information corresponding to each instruction to be generated comprises the code B OP-code of said internal instruction. In the control data field for instruction 1 (302), OP-B1 (306) is given, and correspondingly, in the control information blocks of instructions 2 to 4, OP-B2 (307), OP-B3 (308), and OP-B4 (309) are given.

Next, some extra bits, such as status bits, are provided for each code B OP-code (310). For example, it is specified for each of the internal instructions, to which execution unit it is to be dispatched to (312). Then, the bit patterns used for MUX control (311) are provided.

In order to understand how the MUX control bit patterns correspond to the internal instructions' operands, the control information of instruction 2 (303) is shown in more detail. The MUX control data field (313) for instruction 2 contains bit patterns for each operand of the internal instruction 2. Each bit pattern specifies which of a multitude of possible inputs is to be forwarded to one specific operand data field of the internal instruction, in this case instruction 2. Thus, there exists one bit pattern per internal instruction operand (314, 315, 317, 318, 319).

Logical source registers have to be specified by 5 bits (318, 319), whereby condition code used as a source operand (317) requires two bits, in our implementation. Five select bits are necessary to route the correct instruction part to the "immediate" data field (316). In order to route the correct code A instruction part to the target data field of instruction 2, five select bits are necessary (315). To indicate whether said internal instruction 2 depends on the actual condition code, 2 bits have to be provided (317). To indicate whether said instruction 2 generates new condition code, which means that the actual condition code is modified, two bits are required (314).

Fig. 4 shows the format of an internal instruction, which typically is a RISC instruction. The instruction format given in Fig. 4 separates operands into source operands and target operands and is therefore well-suited for data dependency resolution in superscalar RISC processors. The internal instruction format comprises a data field (401) for the code B OP-code OP-B, and several control bits (402). Furtheron, the instruction address of the corresponding code A instruction is forwarded to the corresponding internal instructions and stored in data field 403. By means of this instruction address, jumps and branches in the external instruction sequence can be translated to the internal instruction sequence. Data field (404) is the "immediate" data field, which contains constants used either in immediate operations or in address arithmetics. Data fields 405, 406, and 407 specify the internal instruction's source operands. The names of two logical registers, that are to be used as source operands, are contained in data fields 406 and 407.

The actual condition code can also be used as a source operand, for example in a "branch on condition" operation. In these cases, it is indicated in data field 405 that the actual condition code is to be used as one of the instruction's sources.

It also has to be specified, in the instruction, where result data is to be written to. Data field 409 contains the name of the logical register that is to be used as a target register. Additionally, an instruction might modify the actual condition code and thus produce a new condition code value. In this case, the new condition code is to be treated as a target operand, and this is indicated in data field 408.

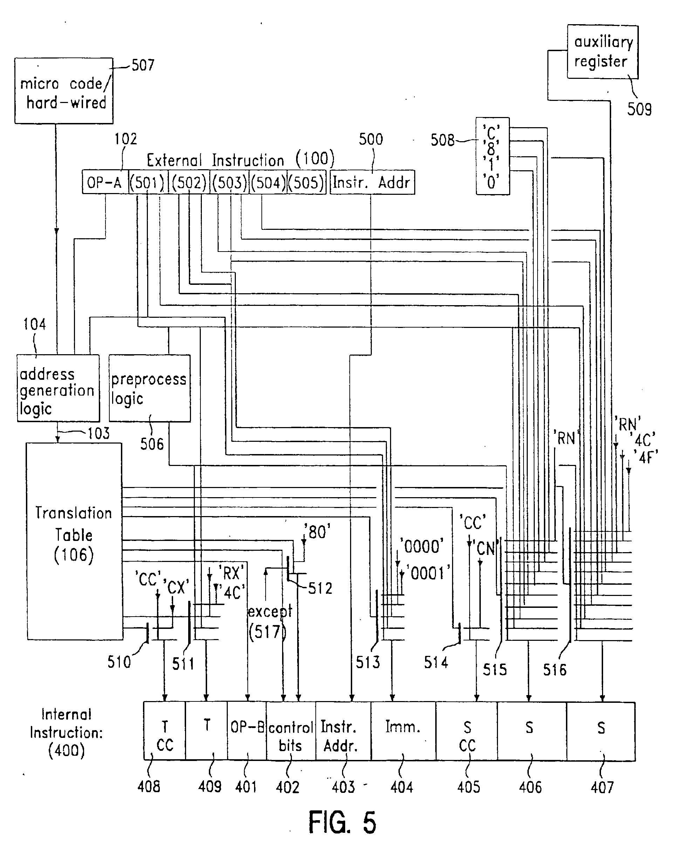

Fig. 5 shows the layout of an instruction converter in a more detailed way. An external code A instruction (100) is to be translated to code B. This is done by obtaining rearrangement information from a translation table 106, and said rearrangement information is used to control a set of multiplexers (510-516). The output of each multiplexer corresponds to one data field of the internal code B instruction (400) that is to be generated.

The external instruction's OP-code OP-A (102) is forwarded to the address generation logic (104). This allows to determine the translation table entry corresponding to OP-A. Said translation table entry contains all the control information needed for each of the multiplexers 510-516. Therefore, said control information is structured according to the data fields of the internal instructions that are to be generated. Each part of the control information is forwarded to its respective multiplexer, in order to select one of the possible inputs of each multiplexer. The selected input is forwarded to the multiplexer's output and written to the data field of the internal instruction (400) to which said multiplexer corresponds.

In order to generate said internal instruction (400), the code B OP-code OP-B is read from the translation table entry corresponding to OP-A, forwarded to the internal instruction, and stored to data field 401. The instruction address (500) of the external instruction 100 is also directly forwarded to the corresponding data field 403 of said internal instruction.

These two data fields of the internal instruction, the data field for the OP-code and the data field for the instruction address, are the only ones that are not coupled to the output of a multiplexer.

In order to understand how the multiplexers work, let us now have a look at how names of logical registers are forwarded to the internal instruction's source data fields 406 and 407. Each of the corresponding multiplexers 515 and 516 has a wide range of possible inputs. The instruction elements 501-505 of the external instruction, which might contain names of logical source registers, are inputs of said multiplexers.

Depending on the instruction's context, it might also make sense to use pre-specified logical register names as inputs. These "constant" names of logical registers are contained in a separate storage 508. These "constants" can also be implemented as hard-wired inputs to said multiplexers 515 and 516. In the example of Fig. 5, the logical register names "RN", "4C" and "4F" are constant inputs of multiplexer 516.

But besides using these constant register names, it is also possible to dynamically allocate logical registers. The names of said logical registers are written to an auxiliary register. Said multiplexers can access said auxiliary registers in order to forward the names of said dynamically allocated registers to respective source data fields (406, 407).

Said permanently allocated and said dynamicly allocated registers are especially useful when a complex external instruction is converted to a number of internal RISC instructions. New data dependencies arise between said corresponding RISC instructions. For example, an intermediate result produced by a first RISC instruction has to be forwarded to a second RISC instruction. In this case, a logical register has to be reserved, which is used as a target by the first instruction and as a source by the second instruction, in order to be able to pass data between the internal instructions.

Basically the same considerations are applied when looking at how the target operands are specified. The corresponding multiplexer 511 can either forward an instruction element of the external instruction (501-505) or a pre-specified register name to target operand field 409.

Said instruction elements of the external instruction (501-505) are either directly forwarded to the multiplexers, or they are modified by a preprocess logic (506) first.

The "immediate" data field 404 does not contain the name of a logical register; it contains a constant value. Said constant can either be obtained from an instruction element (501-505) of the external instruction, or from a constant input, such as "0000" or "0001", which is directly applied to the input of multiplexer 513. For example, by selecting "0001", this value is written to "immediate" data field 404, and an "add immediate" operation would simply perform an increment by one.

Source data field 405 and target data field 408 refer to the handling of condition code. In case the internal instruction 400 depends on the actual condition code, "CC" is forwarded by multiplexer 514 to data field 405. This indicates that the actual condition code is to be used as a source operand. In case the internal instruction does not use condition code as a source operand, "CN" is written to data field 405.

The target data field 408 is handled accordingly. In case the internal instruction 400 modifies the actual condition code, the new condition code is considered as a target operand, and "CC" is written to data field 408. Otherwise, "CX" is stored to data field 408.

Several of the control bits (402) of the internal instruction can be directly obtained from the corresponding translation table entry. For example, the execution unit to which the internal instruction is to be dispatched to (312) can be directly obtained. Additionally, there exists a multiplexer (512), which takes care that whenever an exception (517) occurs, the corresponding control bits are modified accordingly.

In a lot of instruction codes, only a subset of the total instruction set is hard-wired. These are the real basic instructions. All the other instructions of said instruction code are implemented as microcode instructions, which rely on said hard-wired instructions. Each microcode instruction consists of a sequence of hard-wired instructions.

For example, the "move character long" instruction, which is a microcode instruction, consists of the basic instruction "move character", and of a loop control.

There exist two possible methods for applying the instruction conversion mechanism described to microcode instructions. The first method is to relate each microcode instructions of code A to a huge number of explicitly defined internal instructions of code B. Of course, these internal instructions would have to be generated sequentially.

The second method is to first translate said microcode instructions of code A to the corresponding sequence of hard-wired instructions of code A. Then, in a next step, each of the hard-wired external instructions has to be translated to the corresponding sequence of internal instructions by means of the translation table 106. The advantage of this second solution is that for each hard-wired external instruction, the corresponding internal instructions can be generated in parallel.

When performing such a two-step translation of each microcode instruction, the instruction elements of said microcode instruction have to be buffered in said auxiliary registers (509) first. Then, the translation table entry corresponding to said external microcode instruction is accessed. This table entry points to a location in memory, where the sequence of hard-wired external instructions corresponding to said microcode instruction is stored.

Now, each of the hard-wired external instructions can be converted, one after the other, to internal instructions. Whenever a logical register of the microcode instruction has to be addressed, the name of said logical register can be obtained from said auxiliary registers. Dependent on whether the external instruction that is to be translated is a microcode instruction or a hard-wired instruction (507), the adequate translation mode can be chosen.

## Claims

1. An apparatus for converting an instruction (100) of a code A to a number of instructions (101) of a code B, said instruction (100) of code A and each of said instructions (101) of code B consisting of instruction elements (110, 111, 112, 113, 114, 115, 116, 117, 118, 119), comprising:
table means (106), relating said instruction (100) of code A to the number of corresponding instructions (101) of code B, wherein said table means (106), are adapted to relate said instruction (100) of code A to rearrangement information (129) corresponding to said instruction (100) of code A, and wherein said rearrangement information (129) is provided for each of the number of corresponding instructions (101) of code B;
rearrangement means (120, 121, 122, 123, 124), adapted to use said instruction elements (110, 111, 112, 113, 114) of said instruction (100) of code A as a first input, and use said rearrangement information (129) corresponding to said instruction (100) of code A as a second input, and further adapted to rearrange said instruction elements (110, 111, 112, 113, 114) of said instruction (100) of code A, according to said rearrangement information (129), and to generate the number of instructions (101) of code B functionally corresponding to said instruction (100) of code A in parallel.

2. An apparatus according to claim 1, **characterized by** said table means (106) being realized as RAM table means.

3. An apparatus according to claim 1, **characterized in that** said table means (106) are realized as ROM table means.

4. An apparatus according to any of the preceding claims, **characterized in that** said rearrangement means (120, 121, 122, 123, 124) are realized as multiplexing means, which multiplex said instruction elements (110, 111, 112, 113, 114) of said instruction (100) of code A to respective data fields representing instruction elements of at least one functionally corresponding instruction (101) of said instructions of code B.

5. An apparatus according to any of the preceding claims, **characterized in that** said rearrangement information (129) corresponding to said instruction (100) of code A comprises routing information per instruction element of said instruction (101) or said instructions (101) of code B, with said instruction (101) or said instructions (101) of code B functionally corresponding to said instruction. (100) of code A, and said rearrangement means are adapted to determine with said routing information which of said instruction elements of said instruction (100) of code A is to be forwarded to a respective data field representing one of said instruction elements of said instruction (101) or said instructions (101) of code B.

6. An apparatus according to any of the preceding claims, **characterized in that** said table means (106) are adapted to relate an instruction (100) of said instructions of code A to at least one OP-code of at least one functionally corresponding instruction (101) of said instructions of code B.

7. A method for converting an instruction (100) of a code A to a plurality of instructions (101) of a code B, said instruction (100) of code A and each of said instructions (101) of code B consisting of instruction elements (110, 111, 112, 113, 114, 115, 116, 117, 118, 119),
comprising the steps of:
obtaining rearrangement information (129) from at least one table (106) relating said instruction (100) of code A to the plurality of corresponding instructions (101) of code B, wherein said table(s) (106) relate(s) said instruction (100) of code A to rearrangement information (129) corresponding to said instruction (100) of code A that is to be converted to code B, and wherein said rearrangement information (129) is provided for each of the plurality of corresponding instructions (101) of code B;
rearranging said instruction elements (110, 111, 112, 113, 114) of said instruction (100) of code A according to said rearrangement information (129), wherein rearrangement means (120, 121, 122, 123, 124) use said instruction elements (110, 111, 112, 113, 114) of said instruction (100) of code A as a first input, and use said rearrangement information (129) corresponding to said instruction (100) of code A as a second input, and generating the plurality of instructions (101) of code B functionally corresponding to said instruction (100) of code A in parallel.

8. A method according to claim 7, further comprising a step of
multiplexing said instruction elements (110, 111, 112, 113, 114) of said instruction (100) of code A to respective data fields representing instruction elements of the plurality of functionally corresponding (101) of said instructions of code B, according to said rearrangement information (129).

9. A method according to any of claims 7 to 8, further comprising a step of,
obtaining the plurality of instructions (101) of code B corresponding to said instruction (100) of code A from said table (106) or said tables.

10. A method according to any of claims 7 to 9, further comprising the following steps:
providing routing information per instruction element of instructions (101) of code B, said instructions (101) of code B functionally corresponding to said instruction (100) of code A, and
determining, according to said routing information, which of said instruction elements (110, 111, 112, 113, 114) of said instruction (100) of code A is to be forwarded to a respective data field representing one of said instruction elements (115, 116, 117, 118, 119) of said instructions (101) of code B.

## Patentansprüche

1. Vorrichtung zum Umwandeln eines Befehls (100) eines Code A in mehrere Befehle (101) eines Code B, wobei der Befehl (100) des Code A und jeder der Befehle (101) des Code B aus Befehlselementen (110, 111, 112, 113, 114, 115, 116, 117, 118, 119) besteht und die Vorrichtung das Folgende umfasst:
Tabellenmittel (106), die den Befehl (100) des Code A mit den entsprechenden mehreren Befehlen (101) des Code B verknüpfen, wobei die Tabellenmittel (106) so beschaffen sind, dass sie den Befehl (100) des Code A mit den Umordnungsdaten (129) verknüpfen können, die zu dem Befehl (100) des Code A gehören, und die Umordnungsdaten (129) für jeden der mehreren Befehle (101) des Code B bereitgestellt werden,
Umordnungsmittel (120, 121, 122, 123, 124), die so beschaffen sind, dass sie die Befehlselemente (110, 111, 112, 113, 114) des Befehls (100) aus Code A als eine erste Eingabe und die Umordnungs-Daten (129), die zu dem ersten Befehl (100) des Code A gehören, als eine zweite Eingabe verwenden, und des Weiteren dazu geeignet sind, die Befehlselemente (110, 111, 112, 113, 114) des Befehls (100) aus Code A gemäß den Umordnungsdaten (129) neu zu ordnen und die mehreren Befehle (101) des Code B zu erzeugen, die funktionell mit dem Befehl (100) des Code A übereinstimmen.

2. Vorrichtung nach Anspruch 1, **dadurch gekennzeichnet, dass** die Tabellenmittel (106) als RAM-Tabellenmittel ausgeführt sind.

3. Vorrichtung nach Anspruch 1, **dadurch gekennzeichnet, dass** die Tabellenmittel (106) als ROM-Tabellenmittel ausgeführt sind.

4. Vorrichtung nach einem der vorangehenden Ansprüche, **dadurch gekennzeichnet, dass** die Umordnungsmittel (120, 121, 122, 123, 124) als Multiplexmittel ausgeführt sind, die die Befehlselemente (110, 111, 112, 113, 114) des Befehls (100) des Code A an entsprechende Datenfelder multiplexen, die Befehlselemente von wenigstens einem funktionell entsprechenden Befehl (101) der Befehle des Code B wiedergeben.

5. Vorrichtung nach einem der vorangehen Ansprüche, **dadurch gekennzeichnet, dass** die Umordnungsdaten (129), die dem Befehl (100) aus Code A entsprechen, Leitweglenkungs-Daten je Befehlselement des einen oder der mehreren Befehle (101) des Code B umfassen, wobei der eine oder die mehreren Befehle (101) des Code B funktionell mit dem Befehl (100) des Code A übereinstimmen und die Umordnungsmittel dazu geeignet sind, mit den Leitweglenkungs-Daten zu ermitteln, welches der Befehlselemente des Befehls (100) aus Code A an ein entsprechendes Datenfeld weitergeleitet werden soll, das eines der Befehlselemente des Befehls oder der Befehle (101) des Code B wiedergibt.

6. Vorrichtung nach einem der vorangehenden Ansprüche, **dadurch gekennzeichnet, dass** die Tabellenmittel (106) so beschaffen sind, dass sie einen Befehl (100) der Befehle aus Code A mit wenigstens einem Operations-Code wenigstens eines funktionell entsprechenden Befehls (101) der Befehle des Code B verknüpfen können.

7. Verfahren zum Umwandeln eines Befehls (100) aus einem Code A in eine Vielzahl von Befehlen (101) eines Code B, wobei der Befehl des Code A und jeder der Befehle (101) des Code B aus Befehlselementen (110, 111, 112, 113, 114, 115, 116, 117, 118, 119) bestehen und das Verfahren die folgenden Schritte umfasst:
Beschaffen von Umordnungsdaten (129) aus wenigstens einer Tabelle (106), die den Befehl (100) aus Code A mit einer Vielzahl entsprechender Befehle (101) des Code B verknüpft, wobei die eine oder die mehreren Tabellen (106) den Befehl (100) des Code A mit Umordnungsdaten (129) verknüpfen, die dem Befehl (100) aus Code A entsprechen, der in den Code B umgewandelt werden soll, und wobei die Umordnungsdaten (129) für jeden aus der Vielzahl von entsprechenden Befehlen (101) des Code B bereitgestellt werden;
Umordnen der Befehlselemente (110, 111, 112, 113, 114) des Befehls (100) des Code A gemäß den Umordnungsdaten (129), wobei die Umordnungsmittel (120, 121, 122, 123, 124) die Befehlselemente (110, 111, 112, 113, 114) des Befehls (100) des Code A als eine erste Eingabe und die Umordnungsdaten (129) entsprechend dem Befehl (100) aus Code A als eine zweite Eingabe verwenden und die Vielzahl von Befehlen (101) des Code B erzeugen, die funktionell mit dem Befehl (100) aus Code A übereinstimmen.

8. Verfahren nach Anspruch 7, das ferner einen Schritt des
Multiplexens der Befehlselemente (110, 111, 112, 113, 114) des Befehls (100) aus Code A gemäß den Umordnungsdaten (129) an zugehörige Datenfelder, die Befehlselemente aus der Vielzahl von funktionell übereinstimmenden Befehlen (101) aus Code B wiedergeben,
umfasst.

9. Verfahren nach einem der Ansprüche 7 bis 8, das ferner einen Schritt des
Beschaffens der Vielzahl von Befehlen (101) aus Code B, die mit dem Befehl (100) des Code A übereinstimmen, aus der einen oder den mehreren Tabellen (106)
umfasst.

10. Verfahren nach einem der Ansprüche 7 bis 9, das ferner die folgenden Schritte umfasst:
Bereitstellen der Leitweglenkungs-Daten je Befehlselement der Befehle (101) aus Code B, wobei die Befehle (101) aus Code B funktionell mit dem Befehl (100) aus Code A übereinstimmen, und
Ermitteln gemäß der Leitweglenkungs-Daten, welche der Befehlselemente (110, 111, 112, 113, 114) des Befehls (100) aus Code A an ein zugehöriges Datenfeld weitergeleitet werden soll, das eines der Befehlselement (115, 116, 117, 118, 119) der Befehle (101) des Code B wiedergibt.

## Revendications

1. Appareil pour convertir une instruction (100) d'un code A en un certain nombre d'instructions (101) d'un code B, ladite instruction (100) du code A et chacune desdites instructions (101) du code B étant constituées d'éléments d'instruction (110, 111, 112, 113, 114, 115, 116, 117, 118, 119), comprenant :
des moyens de table (106), reliant ladite instruction (100) du code A à la pluralité d'instructions (101) correspondantes de code B, dans lequel lesdits moyens de table (106) sont adaptés pour relier ladite instruction (100) de code A à une information de réagencement (129) correspondant à ladite instruction (100) de code A, et dans lequel ladite information de réagencement (129) est fournie pour chacune de la pluralité d'instructions (101) correspondantes de code B ;
des moyens de réagencement (120, 121, 122, 123, 124), adaptés pour utiliser lesdits éléments d'instruction (110, 111, 112, 113, 114) de ladite instruction (100) de code A en tant que première entrée, et utiliser ladite information de réagencement (129) correspondant à ladite instruction (100) de code A en tant que deuxième entrée, et en outre adapté pour réagencer lesdits éléments d'instruction (110, 111, 112, 113, 114) de ladite instruction (100) de code A, selon ladite information de réagencement (129), et pour générer la pluralité d'instructions (101) de code B, correspondant fonctionnellement à ladite instruction (100) de code A, en parallèle.

2. Appareil selon la revendication 1, **caractérisé en ce que** lesdits moyens de table (106) sont réalisés sous forme de moyens de table RAM.

3. Appareil selon la revendication 1, **caractérisé en ce que** lesdits moyens de table (106) sont réalisés sous forme de moyens de table ROM.

4. Appareil selon l'une quelconque des revendications précédentes, **caractérisé en ce que** lesdits moyens de réagencement (120, 121, 122, 123, 124) sont réalisés sous forme de moyens de multiplexage, multiplexant lesdits éléments d'instruction (110, 111, 112, 113, 114) de ladite instruction (100) de code A en des champs de données respectifs, représentant des éléments d'instruction d'au moins une instruction (101), correspondant fonctionnellement, desdites instructions de code B.

5. Appareil selon l'une quelconque des revendications précédentes, **caractérisé en ce que** ladite information de réagencement (129), correspondant à ladite instruction (100) de code A, comprend de l'information d'acheminement par élément d'instruction de ladite instruction (101) ou desdites instructions (101) de code B, ladite instruction (101) ou lesdites instructions (101) de code B correspondant fonctionnellement à ladite instruction (100) de code A, et lesdits moyens de réagencement étant adaptés pour déterminer, avec ladite information de réagencement, celui desdits éléments d'instruction de ladite instruction (100) de code A qui doit être transmis à un champ de données respectif représentant un desdits éléments d'instruction de ladite instruction (101) ou desdites instructions (101) de code B.

6. Appareil selon l'une quelconque des revendications précédentes, **caractérisé en ce que** lesdits moyens de table (106) sont adaptés pour relier une instruction (100) de code A à au moins un OP-code d'au moins une instruction (101), correspondant fonctionnellement, desdites instructions de code B.

7. Procédé pour convertir une instruction (100) d'un code A en un certain nombre d'instructions (101) d'un code B, ladite instruction (100) du code A et chacune desdites instructions (101) du code B étant constituées d'éléments d'instruction (110, 111, 112, 113, 114, 115, 116, 117, 118, 119), comprenant les étapes consistant à ;
obtenir de l'information de réagencement (129) à partir d'au moins une table (106) reliant ladite instruction (100) du code A à la pluralité d'instructions (101) correspondantes de code B, dans lequel la ou lesdites table(s) (106) relie(nt) ladite instruction (100) du code A à de l'information de réagencement (129) correspondant à ladite instruction (100) de code A devant être convertie en du code B, et dans lequel ladite information de réagencement (129) est fournie pour chacune de la pluralité d'instructions (101) correspondantes de code B ;
réagencer lesdits éléments d'instruction (110, 111, 112, 113, 114) de ladite instruction (100) de code A selon ladite information de réagencement (129), dans lequel des moyens de réagencement (120, 121, 122, 123, 124) utilisent lesdits éléments d'instruction (110, 111, 112, 113, 114) de ladite instruction (100) de code A en tant que première entrée, et utilisent ladite information de réagencement (129) correspondant à ladite instruction (100) de code A en tant que deuxième entrée, et
générer la pluralité d'instructions (101) de code B, correspondant fonctionnellement à ladite instruction (100) de code A, en parallèle.

8. Procédé selon la revendication 7, comprenant une étape consistant à :
multiplexer lesdits éléments d'instruction (110, 111, 112, 113, 114) de ladite instruction (100) de code A en des champs de données respectifs, représentant des éléments d'instruction de la pluralité d'instructions (101), correspondant fonctionnellement, desdites instructions de code B, selon ladite information de réagencement (129).

9. Procédé selon l'une quelconque des revendications 7 à 8, comprenant en outre une étape consistant à :
obtenir la pluralité d'instructions (101) de code B, correspondant fonctionnellement à ladite instruction (100) du code A, à partir de ladite table (106) ou desdites tables.

10. Procédé selon l'une quelconque des revendications 7 à 9, comprenant en outre les étapes suivantes de :
fourniture d'une information d'acheminement par élément d'instruction des instructions (101) de code B, lesdites instructions (101) de code B correspondant fonctionnellement à ladite instruction (100) de code A, et
détermination, selon ladite information d'acheminement, de celui desdits élément d'instruction (110, 111, 112, 113, 114) de ladite instruction (100) du code A qui doit être transmis à un champ de données respectif, représentant l'un desdits éléments d'instruction (115, 116, 117, 118, 119) desdites instructions (101) du code B.
